# EUROPEAN PATENT SPECIFICATION

(11) **EP 0 375 431 B1**
(45) Date of publication and mention of the grant of the patent: **04.01.1995**
(21) Application number: 89313453.6
(22) Date of filing: 21.12.1989
(51) Int. Cl.: H04N 1/40, H04N 1/036, H04N 1/41

(54) **Bandwidth reduced multi-pass writing of variable gray level digital images**
Mehrfachschreiben variabler Grautondigitalbilder mit reduzierter Bandbreite
Ecriture multiple à bande passante réduite d'images numériques à niveau de gris variable

(30) Priority: 22.12.1988 US 288514
(43) Date of publication of application: 27.06.1990
(73) Proprietor: XEROX CORPORATION, Rochester New York 14644 (US)
(72) Inventor: Hecht, David L., Palo Alto California 94303 (US); Sprague, Robert A., Saratoga California 95070 (US)
(74) Representative: Johnson, Reginald George

(56) References cited:
- DE-A- 3 720 393
- US-A- 4 661 859
- US-A- 4 751 659
- LASER FOCUS. vol. 19, no. 10, October 1983, TULSA US pages 101-109; Sprague et al.: "ADVANCES IN LASER AND E-O PRINTING TECHNOLOGY"

## Description

This invention relates to methods and means for printing and displaying user-viewable renderings of digitally represented, variable gray level images. More particularly, it pertains to methods and means for reducing the bandwidth required for multi-pass writing of such images.

Various display devices and printers are employed for producing user-viewable renderings of digitally represented images, such as digitally processed images and computer generated synthetic images. It is well known in the printing art that gray-scale shading often enhances the perceived quality of printed images, so several techniques have been proposed for rendering such images, including some multi-pass processes.

Multi-pass printing of variable gray level images is carried out by writing a plurality of gray-scale separations of each image in superimposed registration, so that the separations spatially sum to form the image. These separations could be written, one on top of the other, directly on an ultimate recording medium, such as paper. In practice, however, they more typically are written in superimposed registration on an intermediate recording medium, such as a xerographic photoreceptor, so the image is fully formed before being transferred to the ultimate recording medium. While transfer xerography is a straightforward example of a process that is well suited to multi-pass printing of variable gray level images, it is to be understood that this invention may be applied to other multi-pass processes for printing and displaying (collectively referred to herein as "writing") images.

Prior multi-pass processes for producing user-viewable renderings of digitally represented, variable gray level images have contemplated providing a different gray-scale image separation for each resolvable shade of gray. Under those circumstances, n separations are needed for writing images containing up to n distinct shades of gray, so the bandwidth required for writing richly shaded images tends to be excessive, even if the images are written at a moderate rate. Therefore. a primary goal of this invention is to enable the bandwidth that is needed for multi-pass writing of digitally represented, variable gray level images to be reduced.

In accordance with the present invention, user-viewable renderings of variable gray level images, which are composed of pixels represented by binary coded codewords, are written on a suitable recording medium by one or more pixel generators which have their write responses "code matched" to the codewords. More particularly, the write responses of the pixel generators are code matched to the codewords by cyclically and bit synchronously stepping them through a series of gray-scale values which are selected to substantially match the binary weights of the respective bits of the codewords. Such code matched pixel generators are selectively write enabled and disabled in response to the logic levels of the successive bits of the codewords that are applied to them, whereby the binary weighted writes any of them performs in response to a given codeword spatially sum to form a pixel having substantially the same gray-scale value as the given codeword.

By way of example methods and systems in accordance with the invention will be described with reference to the attached drawings, in which:
Figure 1 is a simplified schematic diagram of a.printhead having an array of individually addressable pixel generators for printing variable gray level images in accordance with this invention;
Figure 2 is a graph illustrating a simple repetitive sequence of binary weighted subline exposure values for pixels occupying process direction aligned positions in successive lines of an image;
Figure 3 is a graph illustrating the family of binary weighted subexposure profiles which correspond to the sequence of subline exposures shown in Fig. 2, together with the relative positioning of those profiles in the process direction;
Figure 4 is a graph illustrating a repetitive, symmetrically balanced (even symmetry), sequence of binary weighted subline exposure values for pixels occupying process direction aligned positions in successive lines of an image;
Figure 5 is a graph illustrating another repetitive, symmetrically balanced (odd symmetry) sequence of binary weighted subline exposure values for pixels occupying process direction aligned positions in successive lines of an image;
Figure 6 is a graph illustrating a family of binary weighted, symmetrically paired subexposure profiles which correspond to a symmetrically balanced sequence of binary weighted subline exposure values, together with the relative positioning of those paired profiles in the process direction;
Figure 7 is a graph illustrating a repetitive, assymmetrical but substantially balanced sequence of binary weighted subline exposure values for pixels occupying process direction aligned positions in successive lines of an image;
Figure 8 is a graph illustrating the family of binary weighted subexposure profiles which correspond to the re-ordered sequence of subline exposures shown in Fig. 7, together with the relative positioning of those profiles in the process direction;
Figure 9 is a graph illustrating an alternative implementation in which the subexposures are binary weighted by modulating their durations;
Figure 10 is a simplified isometric view of a line printer,
Figure 11 is an enlarged elevational view of the spatial light modulator for the image bar that is used in the line printer shown in Fig. 10; and
Figure 12 is a bottom cutaway view of the modulator shown in Fig. 11.

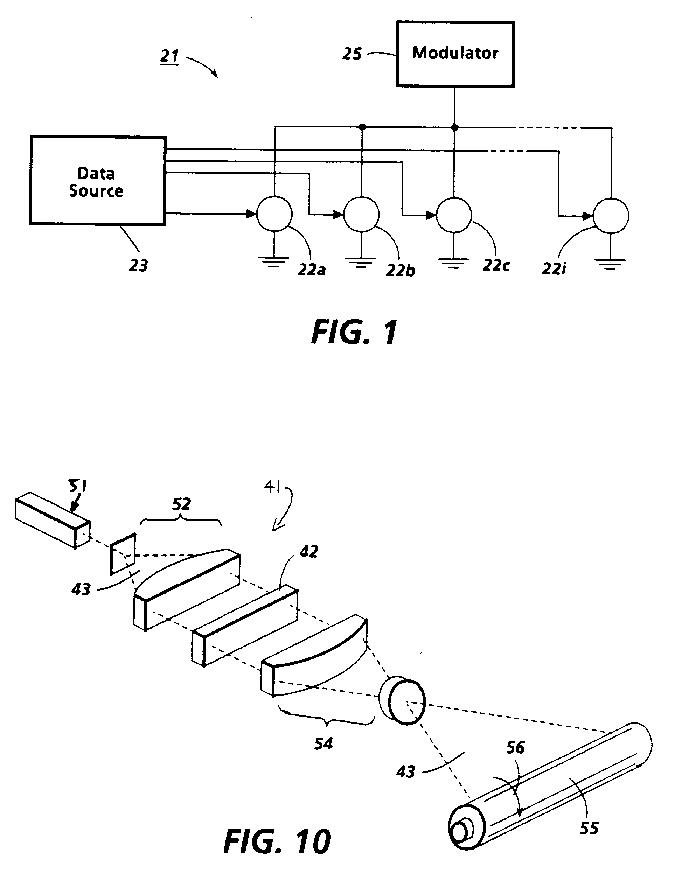

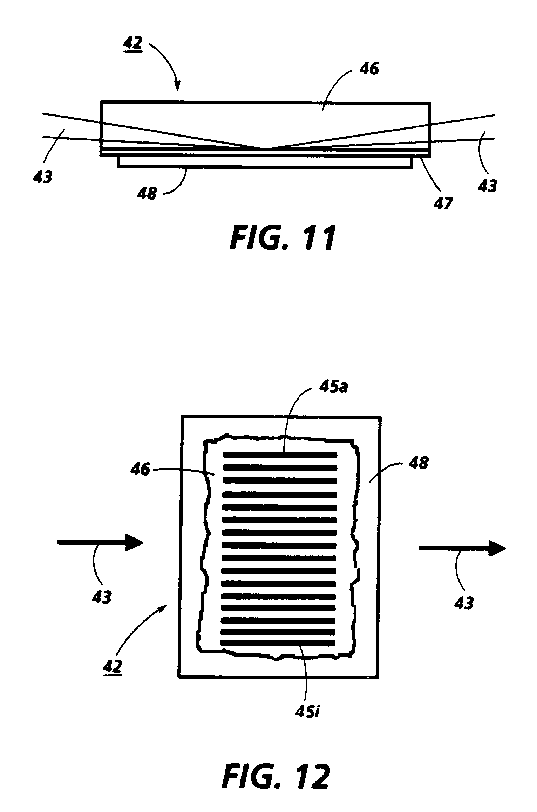

Fig. 1, shows a printhead 21 having one or more individually addressable pixel generators 22a-22i, together with a data source 23 for applying fixed length, multi-bit binary codewords to the pixel generators 22a-22i in bit serial form (i. e., bit-by-bit) at a predetermined per pixel generator pixel printing rate (hereinafter referred to as the "normalized pixel printing rate"). The codewords are coded in accordance with a binary code to represent the gray-scale values of respective pixels, so they cause the pixel generators 22a-22i to print images composed of variable gray level pixels (i. e., gray-scale shaded images) on an intermediate or an ultimate recording medium (not shown in Fig. 1, but see Fig. 10).

As will be appreciated, the normalized pixel printing rate is a convenient expedient for describing the rate at which codewords are applied to the pixel generators of various printheads, without having to elaborate on the distinctive characteristics of the different printheads. In practice, however, the configuration of the printhead 21 typically influences both the rate and the manner in which codewords are applied to its pixel generators 22a-22i. For example, if the printhead 21 has a linear or a staggered pagewidth array of pixel generators 22a-22i that are distributed widthwise of the recording medium on laterally stationary centers for performing line printing, codewords usually are applied to its pixel generators 22a-22i in parallel or by a high speed multiplexer at the line printing rate. On the other hand, if the printhead 21 is equipped with just one pixel generator, such as the pixel generator 22a, for printing images in accordance with a raster scanning pattern, codewords are applied to the lone pixel generator 22a serially at the pixel printing rate.

Regardless of the configuration of the printhead 21, a modulator 25 cyclically steps the write responses of the pixel generators 22a-22i through a predetermined sequence of "binary code matching" gray-scale values that are binary weighted to substantially match the values of the respective bits of the binary coded codewords. More particularly, the modulator 25 steps the write responses of the pixel generators 22a-22i through this sequence of code matching gray-scale values in timed synchronism with the successive bits of the codewords that are applied to them (i. e., at the bit rate of the codewords), while cycling at the normalized pixel printing rate to repeat the bit-by-bit code matching process for successive codewords. The pixel generators 22a-22i, in turn, are selectively write enabled and disabled at the bit rate depending on the logic levels ("1" or "0") of the successive bits of the codewords that are applied to them, whereby the spatial sum of the writes any one of them performs in response to any given codeword defines a pixel having approximately the same gray-scale value as the codeword.

Printheads having optical pixel generators are well suited for such operation because their write responses can be controlled by modulating the intensity and/or the duration of their output pulses, but it is to be understood that other printheads could be used. As is known, the density (i. e., gray-scale level) of the writes performed by an optical pixel generator often are a non-linear function of the intensity and width or "on-time" of their optical output pulses, so it is to be understood that the gray-scale linearity of such a pixel generator may be enhanced by scaling the gray-scale values of the codewords that are applied to it in accordance with a complementary tone reproduction curve. Pixel appearance also may be affected by some motion blur because there generally is some relative motion between the printhead and the recording medium during the finite time period that is required for performing the multiple writes that are used to define the pixels. Fortunately, however, the bit length of the codewords and the algorithm that is employed for coding them can be selected to more or less minimize the image degradation caused by such motion blur. Furthermore, it is to be noted that provision may be made to compensate for sagittal motion, as more fully described, for example, in United States Patent No. 4,751,659 of D. L. Hecht, which issued June 14, 1988, on "Defect Compensation for Discrete Image Bars."

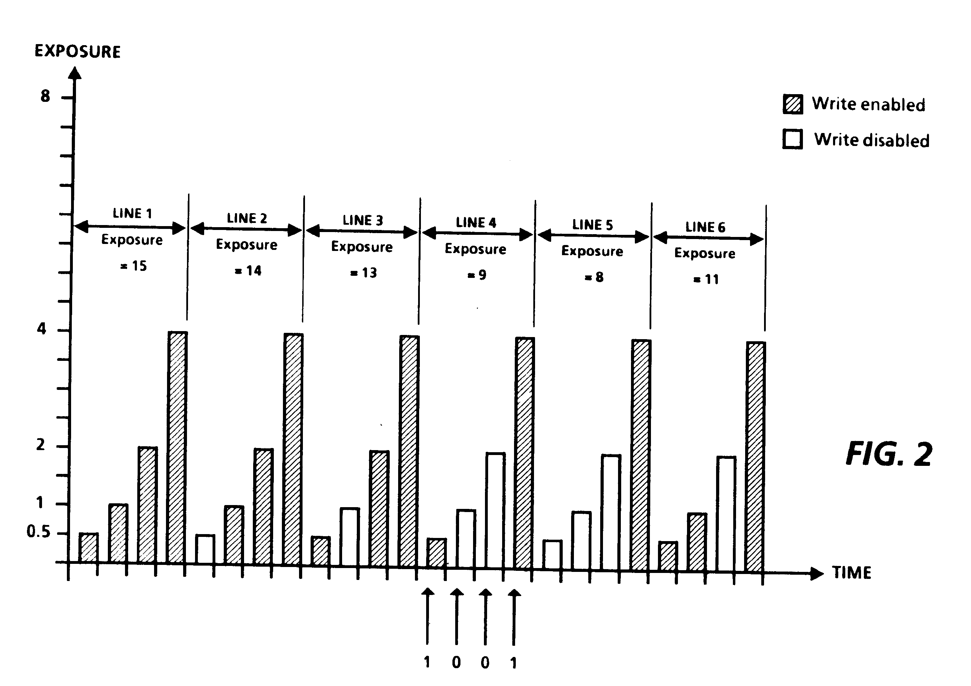

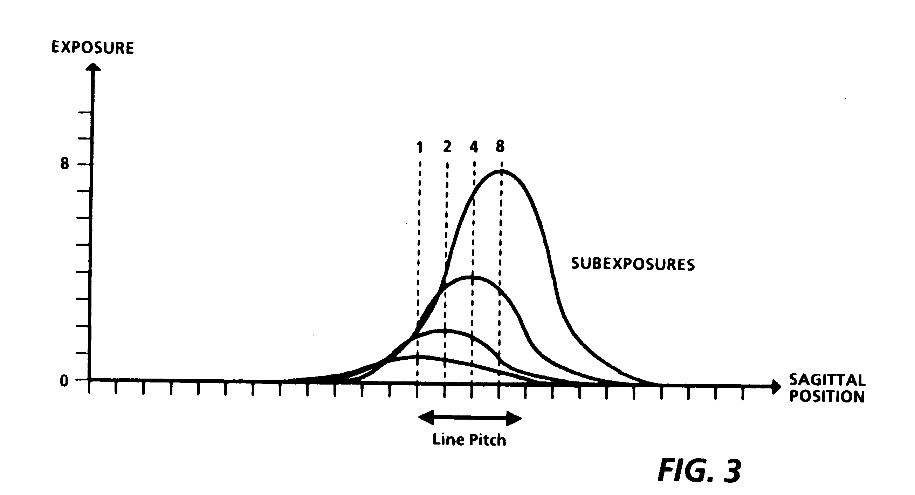

Referring to Figs. 2 and 3, it will be apparent that the bandwidth required for printing and displaying variable gray level images can be significantly reduced (as used herein, "gray" refers to the density of the image, regardless of its color or tone). For example, up to sixteen different shades of gray (including a "white") can be represented by four bit long binary coded codewords. In accordance with this invention, however, the write responses of the pixel generators 22a-22i (Fig. 1) are code matched to the codewords, so only four gray-scale writes (Fig. 3) are needed for converting such codewords into corresponding pixels (i. e., for decoding the codewords).

For illustrative purposes, Figs. 2 and 3 depict the operation of an optical line printer in which the write responses of the pixel generators 22a-22i cycle at the line printing rate and are code matched to the successive bits of the codewords for exposing "sublines" of the image to a sequence of binary weighted gray-scale image separations at the bit rate. Therefore, each line of the written image is composed of a plurality of overlapping subline exposures which spatially sum with each other to define the exposure profile of the line. It will be understood, however, that the timing relationships and the manner in which the write responses of the pixel generators 22a-22i are controlled are dependent on the configuration of the printhead 21 (Fig. 1) and on the type of pixel generators 22a-22i that are employed, respectively. Thus, it will be evident that printheads having different configurations or employing other types of pixel generators may be used in accordance with their own distinctive operating principles.

A straightforward binary counting code of progressively decreasing or, as shown in Fig. 2, progressively increasing binary weighted bit value may be utilized for coding the codewords, such that the binary weights of the bits of each of the codewords vary from the first bit to the last bit, or vice-versa, in accordance with a function Alog₂, where A = 0, 1, 2,.... However, a better balanced code may improve the perceived quality of the printed or displayed images by increasing the symmetry of pixels composed of multiple writes. In particular, if there is sufficient motion blur of the pixels to cause appreciable misregistration of such multiple writes, the use of a grossly unbalanced code, such as an ordinary binary counting code, may cause sufficient assymmetrical distortion of the pixel profiles (see Fig. 3) to materially degrade the appearance of the written image.

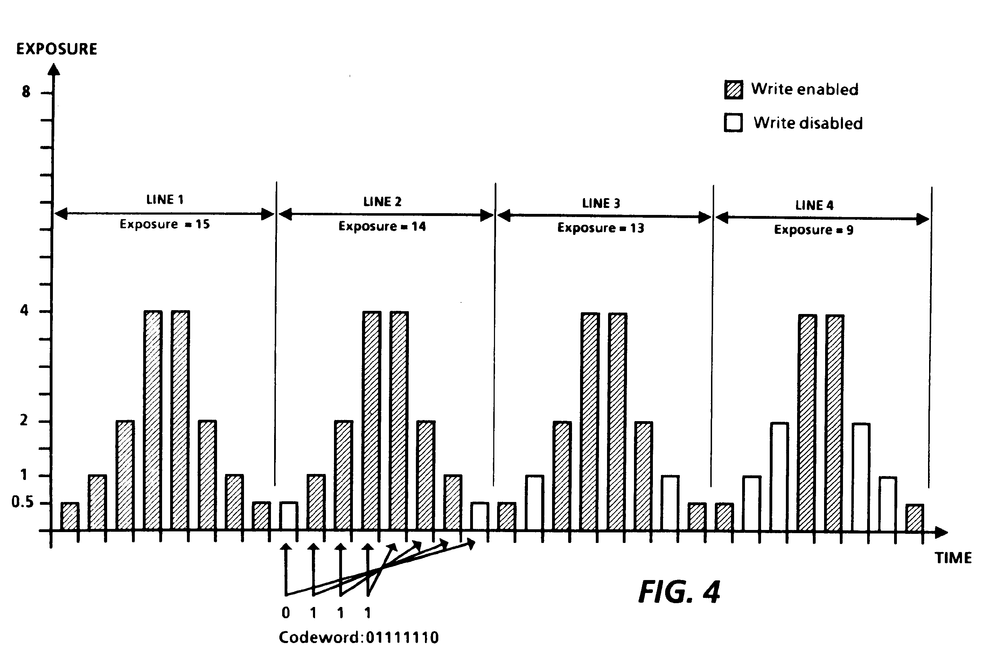

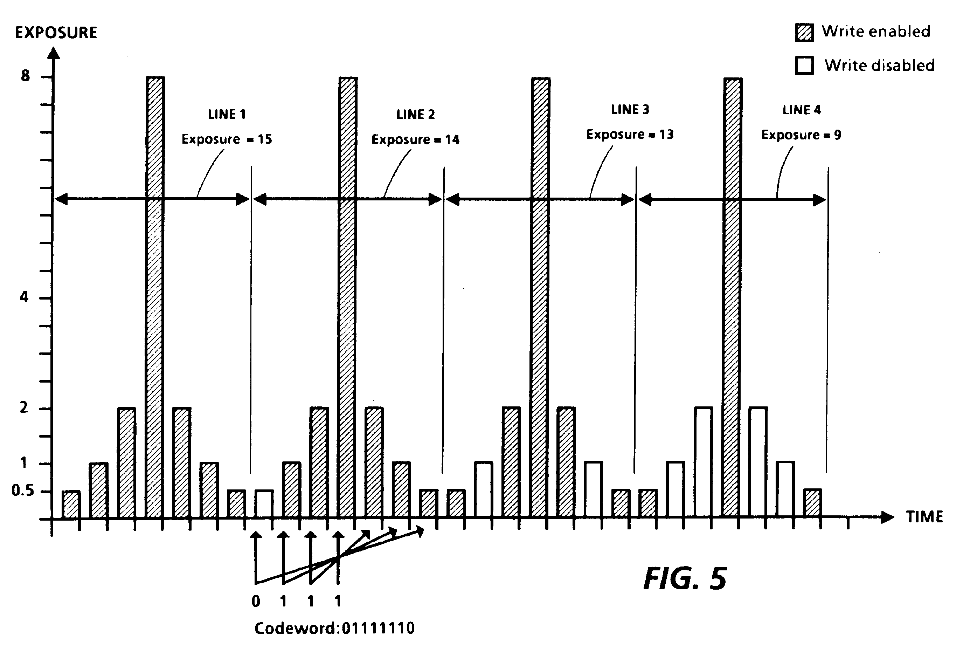

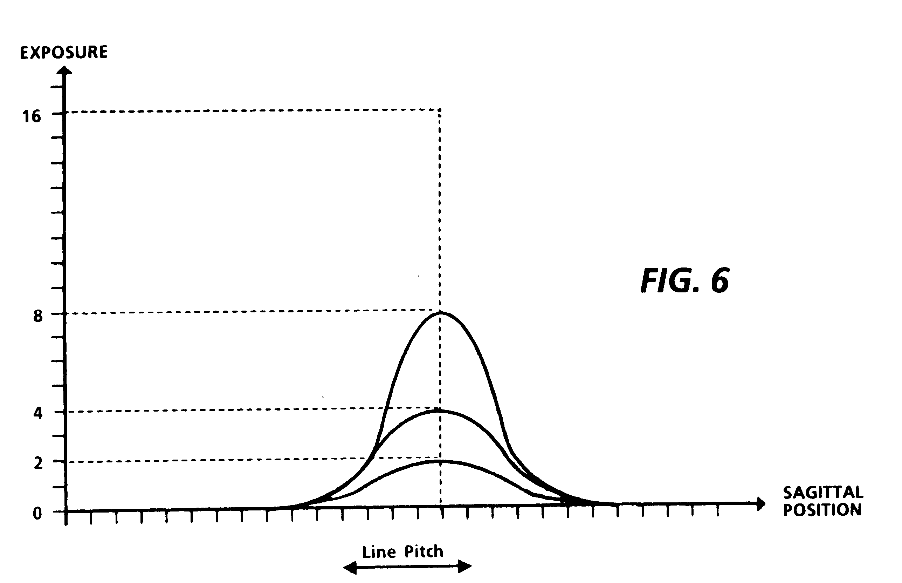

For that reason, as shown in Figs. 4-6, the codewords may be coded in accordance with a binary code having an even symmetry (Fig. 4) or an odd symmetry (Fig. 5), thereby ensuring that the pixel profiles are all substantially symmetrical (Fig. 6). As will be seen, the exposure values of the symmetrically paired writes are reduced by a factor of two because both or neither of those writes are performed during the decoding of a given codeword. Of course, when a code having an odd symmetry is employed, a full scale mid-sequence exposure value is employed (see Fig.5).

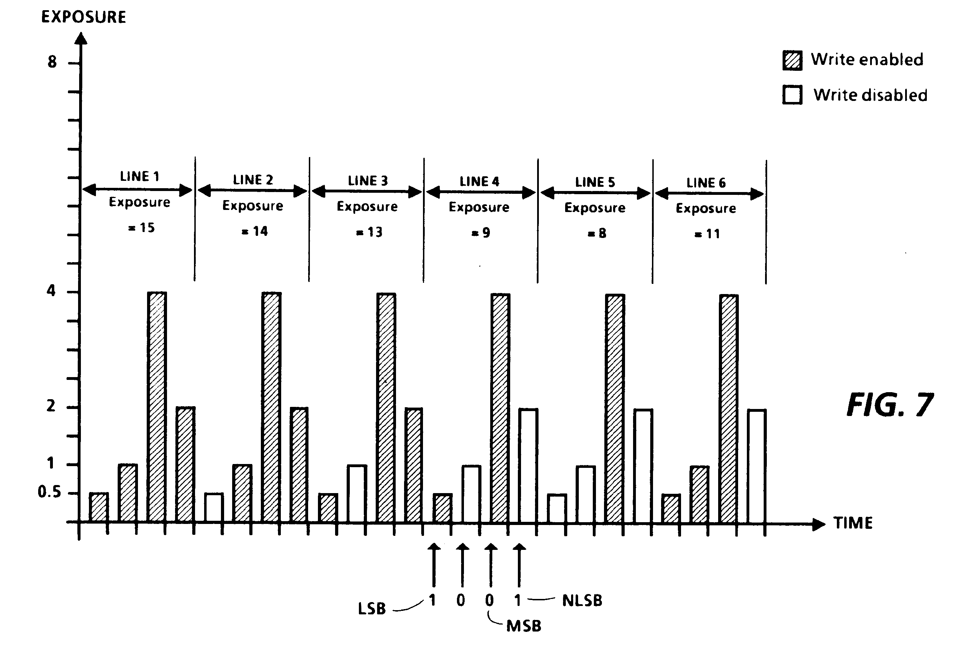

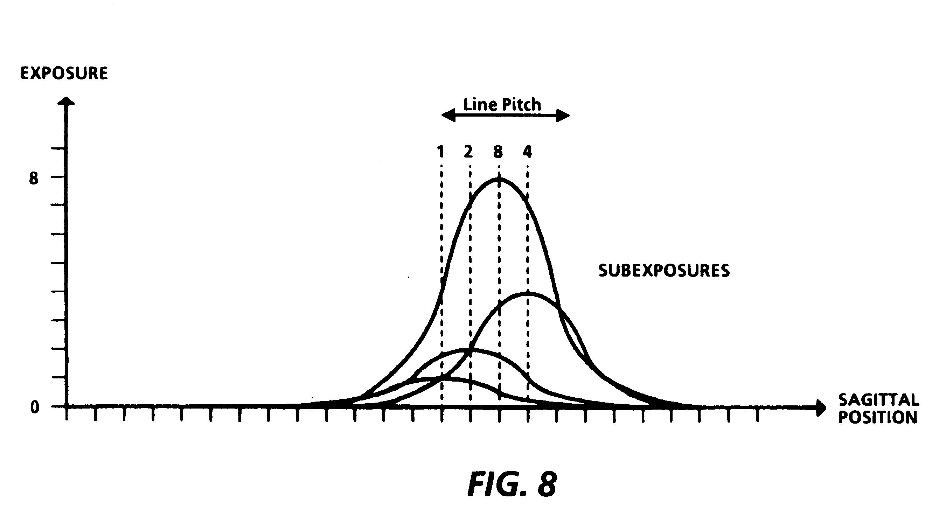

To achieve a desired level of gray-scale resolution while employing a code having an even or odd symmetry, the bit length of the codewords must be approximately doubled, but that may be an acceptable alternative in some situations. However, in bandwidth constrained situations, it may be preferable to improve the balance of the codewords by non-sequentially ordering the weights of their bits, thereby improving the symmetry of at least the more troublesome pixels, without requiring the use of longer codewords. For example, as shown in Figs. 7 and 8, the bit weights of the codewords may be re-ordered so that the most significant bit (MSB) of each codeword resides in an interior bit position, closer to the codeword center than the next less significant bit (NLSB). As will be appreciated, this bit weight re-ordering is a more or less empirical solution to the symmetry problem, so the optimum ordering of the bits is dependent on the bit length of the codewords and on the relative binary weights of their bits,

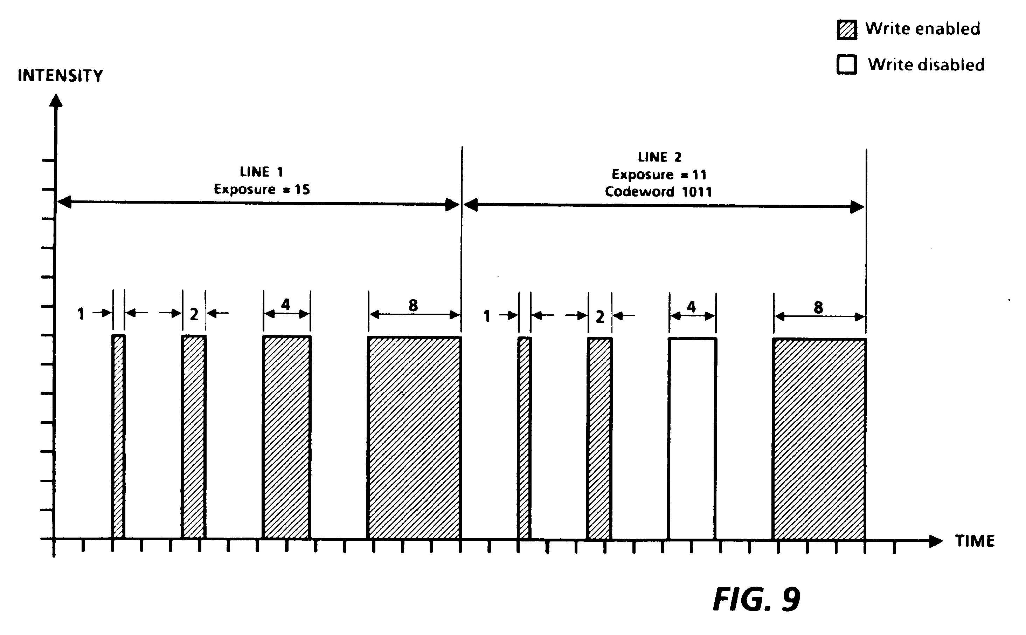

Referring to Fig. 9, it will be recalled that pulse width modulation may be employed as an alternative to the above-described intensity modulation process (Figs 2, 4, 5 and 7) for code matching the write responses of optical pixel generators to binary coded codewords. Indeed, the exposure of a non-saturated optical recording medium varies in accordance with the intensity and the duration of the incident radiation, so a combination of intensity modulation and pulse width modulation could be employed, if desired, for code matching the write responses of such pixel generators, without departing from this invention.

Turning to Figs 10-12 for a practical example of a recording device, it will be seen that there is a line printer 41 having an electrooptic total internal reflection (EO TIR) modulator 42 for spatially modulating a collimated, sheet-like light beam 43 in accordance with the voltage pattern applied to a set of individually addressable electrodes 45a-45j (Fig. 12). The modulator 42 has an electrooptic element 46, such as a lithium niobate crystal (LiNbO₃), with an optically polished longitudinal surface 47 which is intimately electrically coupled to the electrodes 45a-45j. The electrodes 45a-45j, in turn, are aligned parallel to the longitudinal axis of the modulator 42 and are distributed in spaced apart relationship across essentially the full width of the electrooptic element 46 on substantially equidistant centers. Advantageously, the electrodes 45a-45j are integrated with their drivers and addressing electronics (not shown) on a very large scale integrated (VLSI) circuit 48.

As illustrated, the light beam 43 is aligned axially with respect to the modulator 42 and is applied to it at a near grazing angle of incidence with respect to the optically polished surface 47 of the electrooptic element, such that the beam 43 totally internally reflects from that surface. Typically, the beam 43 is supplied by a laser 51 or the like and is anamorphically expanded widthwise of the modulator 42 to illuminate substantially the full width of its electrooptic element 46. Furthermore, the light beam 43 conventionally is brought to a cylindrical or wedge-shaped focus essentially on the reflective surface 47 of the electrooptic element 46 at about mid-length along the electrodes 45i-45j. The optics for expanding and focusing the beam 43 are schematically illustrated in Fig. 10 at 52

Data dependent voltage patterns are applied to the electrodes 45i-45j during operation, whereby electric fringe fields are coupled into the electrooptic element 46 by any neighboring pair of electrodes which are driven to different voltage levels. In other words, each of the pixel generators 22a-22i of Fig. 1 comprises a pair of neighboring (i. e., adjacent) electrodes in the printhead shown in Figs. 10-12. More particularly, the fringe fields that are coupled into the electrooptic element 46 locally perturb its refractive index, so they interact with the light beam 43 as it propagates therethrough by spatially modulating its phase front. Accordingly, a Schlerien imaging system, shown schematically at 54 in Fig. 10, is provided for converting the phase front modulation of the light beam 43 into a corresponding intensity profile which, in turn, exposes a photosensitive recording medium 55, such as a xerographic photoreceptor, in accordance with the data applied to the electrodes 45i-45j. In other words, the combination of the spatial light modulator 42 with the Schlerien imaging system 54 functions as an optical image bar for exposing the recording medium 55. Characteristically, of course, the recording medium 55 is exposed as it is advancing at a more or less constant speed in a cross-line or process direction relative to the modulator 42, as indicated by the arrow 56.

An EO TIR modulator, such as the modulator 42, has a very high speed of response, so the printer 41 is extremely well suited for carrying out a method as described above. "Subline exposures," representing the binary weighted gray-scale separations for any given line of an image, are sequentially printed in overlapping relationship on the recording medium 56 by applying one after another of the bits of the codewords for the pixels along the line to the modulator electrodes 45i-45j in "differentially encoded form." As is known, such "differential encoding" causes high ("1") logic level bits to be represented by a voltage transition ("1" to "0" or "0" to "1") between adjacent electrodes, while ensuring that low ("0") logic level bits are represented by the absence of such a transition: see United States Patent No. 4,450,459 of W. D. Turner et al, which issued on May 22, 1984, for "Differential Encoding for Fringe Field Responsive Electro-Optic Line Printers." Thus, if the write response of the modulator 42 is code matched to the codewords, the subline exposures for a given line of an image spatially sum to define an exposure profile which varies in accordance with the gray-scale values of the pixels lying along that line.

As previously indicated, the write response of the modulator 42 can be code matched to the codewords by intensity modulating and/or pulse width modulating the light beam 43. Still another option is to amplitude modulate, say, the high ("1") logic level voltage for the electrodes 45i-45j in timed synchronism with the successive bits of the codewords, so that the voltage transitions that occur are binary weighted to substantially match the bit weights. This amplitude modulation technique takes advantage of the analog voltage response of the modulator 42, so it is to be understood that the gray level values of the codewords may be nonlinearly scaled to compensate not only for any gray-scale nonlinearity of the xerographic printing process, but also for any nonlinearity in the voltage response characteristics of the modulator 42.

The methods and systems described above reduce the bandwidth required for multi-pass writing of digitally represented, variable gray level images. Furthermore, the described methods can be implemented economically and efficiently using a variety of printhead configurations and pixel generators for printing and displaying the images. For example, LED image bars, such as desribed in I. Abiko et al., "High Printing Quality LED Printheads," Journal of Imaging Technology, Vol. 12, No. 5, October 1986, pp. 296-299 might be employed.

## Claims

1. A system for producing user-viewable renderings of digitally represented, variable gray level images; said system including at least one pixel generator (22a ----) having a controllable gray-scale write response for writing said images on a recording medium in response to fixed length, multi-bit codewords which represent respective pixels of said images; said codewords being binary coded so that each of their bits has a predetermined binary weight;
means (23) for bit serially applying certain of said codewords to said pixel generator, said codewords being sequentially applied to said pixel generator at a normalized pixel printing rate for selectively write enabling and disabling said pixel generator at a predetermined bit rate in response to first logic level and second logic level bits, respectively, of one after another of said codewords; and
modulator means (25) coupled to said pixel generator for cyclically stepping its write response through a series of gray-scale values selected to substantially match the binary weights of the bits of said codewords; the write response of said pixel generator being cycled at said normalized pixel printing rate and being stepped through said bit weight matching gray-scale values at said bit rate for code matching said pixel generator to said codewords for multi-pass writing of the pixels they represent.

2. A system as claimed in Claim 1, wherein said codewords are composed of symmetrically weighted bits, whereby said codewords are balanced.

3. A system as claimed in Claim 1, wherein said codewords are composed of assymmetrically weighted bits which are ordered to enhance the balance of such codewords.

4. A system as claimed in any one of Claims 1-3, wherein
said pixel generator is an optical pixel generator, and
said recording medium is photosensitive.

5. A system as claimed in Claim 4, wherein
said pixel generator comprises an illuminator for supplying a light beam, an electrooptic element (46) having an optically polished surface (47) for totally internally reflecting said light beam, and a pair of neighboring electrodes (45) intimately electrically coupled to said surface;
said codewords are bit serially applied to said electrodes for producing a voltage drop between said electrodes which is dependent on the logic levels of said bits, whereby said light beam is modulated in accordance with said bits,
said recording medium (55) is exposed by the modulated light beam while advancing at a substantially constant speed in a process direction relative to said pixel generator.

6. A system as claimed in Claim 4 or Claim 5, wherein said modulator means intensity modulates said optical pixel generator for cyclically stepping its write response through said series of gray-scale values.

7. A system as claimed in Claim 4 or Claim 5, wherein said modulator means pulse width modulates said optical pixel generator for cyclically stepping its write response through said series of gray-scale values.

8. A system as claimed in Claim 5, wherein said modulator means amplitude modulates the voltage drop between said electrodes for cyclically stepping the write response of said pixel generator through said series of gray-scale values.

9. A method for producing user-viewable renderings of digitally represented, variable gray level images, using a pixel generator having a controllable gray-scale write response for writing on a recording medium in response to fixed-length, multi-bit codewords, the method comprising the steps of:
bit serially applying, to the pixel generator, multi-bit codewords of the said fixed length, which codewords represent respective pixels of said images and are binary coded so the each of their bits has a predetermined binary weight, said codewords being sequentially applied to said pixel generator at a normalized pixel printing rate for selectively write enabling and disabling said pixel generator at a predetermined bit rate in response to first logic level and second logic level bits, respectively, of one after another of said codewords; and
cyclically stepping the write response of the pixel generator through a series of gray-scale values selected to substantially match the binary weights of the bits of said codewords;
the write response of said pixel generator being cycled at said normalized pixel printing rate and being stepped through said bit weight matching gray-scale values at said bit rate for code matching said pixel generator to said codewords for multi-pass writing of the pixels they represent.

## Patentansprüche

1. System zur Herstellung vom Anwender zu betrachtender Wiedergaben von digital dargestellten, variablen Grautonbildern, wobei das System wenigstens einen Pixelgenerator (22a ...) mit einer steuerbaren Graustufen-Schreibreaktion, um die Bilder als Reaktion auf Mehrbit-Codewörter fester Länge, die jeweilige Pixels der Bilder darstellen, auf ein Aufzeichnungsmedium zu schreiben, wobei die Codewörter binär codiert sind, so daß jedes Ihrer Bits ein vorbestimmtes Binärgewicht besitzt;
eine Einrichtung (23), die bestimmte dieser Codewörter bitseriell an den Pixelgenerator anlegt, wobei die Codewörter mit einer normalisierten Pixeldruckgeschwindigkeit sequentiell an den Pixelgenerator angelegt werden, um das Schreiben des Pixelgenerators mit einer vorbestimmten Bitfolge als Reaktion auf erste Logikpegelbits und zweite Logikpegelbits eines Codewortes nach dem anderen einzeln freizugeben bzw. zu sperren, sowie
eine mit dem Pixelgenerator verbundene Modulatoreinrichtung (25) umfaßt, die seine Schreibreaktion zyklisch schrittweise durch eine Reihe von Graustufenwerten laufen läßt, die ausgewählt sind, um den Binärgewichten der Bits der Codewörter im wesentlichen zu entsprechen, wobei die Schreibreaktion des Pixelgenerators mit der normalisierten Pixeldruckgeschwindigkeit zyklisch durchlaufen wird und mit der Bitfolge schrittweise durch die Bitgewichten entsprechenden Graustufenwerte geführt wird, um den Pixelgenerator mit den Codewörten zum Mehrfachschreiben der Pixels, die sie darstellen, codemäßig abzugleichen.

2. System nach Anspruch 1, bei dem die Codewörter aus symmetrisch gewichteten Bits bestehen, wodurch die Codewörter ins Gleichgewicht gebracht werden.

3. System nach Anspruch 1, bei dem die Codewörter aus unsymmetrisch gewichteten Bits bestehen, die geordnet werden, um das Gleichgewicht von derartigen Codewörtern zu verbessern.

4. System nach einem der Ansprüche 1 bis 3, bei dem der Pixelgenerator ein optischer Pixelgenerator ist und das Aufzeichnungsmedium lichtempfindlich ist.

5. System nach Anspruch 4, bei dem der Pixelgenerator einen Illuminator, der einen Lichtstrahl liefert, ein elektrooptisches Element (46) mit einer optisch polierten Oberfläche (47), die den Lichtstrahl innen vollständig reflektiert, und ein Paar benachbarter Elektroden (45) umfaßt, die elektrisch eng mit der Oberfläche gekoppelt ist;
die Codewörter bitseriell an die Elektroden angelegt werden, um einen Spannungsabfall zwischen den Elektroden zu erzeugen, der von den Logikpegeln der Bits abhängt, wodurch der Lichtstrahl nach Maßgabe der Bits moduliert wird, und
das Aufzeichnungsmedium (55) durch den modulierten Lichtstrahl belichtet wird, während es sich mit einer im wesentlichen konstanten Geschwindigkeit in einer Prozeßrichtung in bezug auf den Pixelgenerator voranbewegt.

6. System nach Anspruch 4 oder 5, bei dem die Modulatoreinrichtung den optischen Pixelgenerator intensitätsmoduliert, um seine Schreibreaktion zyklisch schrittweise durch die Reihe von Graustufenwerten zu führen.

7. System nach Anspruch 4 oder 5, bei dem die Modulatoreinrichtung den optischen Pixelgenerator pulsbreitenmodullert, um seine Schreibreaktion zyklisch schrittweise durch die Reihe von Graustufenwerten zu führen.

8. System nach Anspruch 5, bei dem die Modulatoreinrichtung den Spannungsabfall zwischen den Elektroden amplitudenmoduliert, um die Schreibreaktion des Pixelgenerators zyklisch schrittweise durch die Reihe von Graustufenwerten zu führen.

9. Verfahren zur Herstellung vom Anwender zu betrachtender Wiedergaben von digital dargestellten, variablen Grautonbildern, das einen Pixelgenerator mit einer steuerbaren Graustufen-Schreibreaktion verwendet, um als Reaktion auf Mehrbit-Codewörter fester Länge auf ein Aufzeichnungsmedium zu schreiben, wobei das Verfahren die Schritte umfaßt:
bitseriell Anlegen, an den Pixelgenerator, Mehrbit-Codewörter der festen Länge, wobei die Codewörter jeweilige Pixels der Bilder darstellen und binär codiert sind, so daß jedes ihrer Bits ein vorbestimmtes Binärgewicht besitzt, wobei die Codewörter mit einer normalisierten Pixeldruckgeschwindigkeit sequentiell an den Pixelgenerator angelegt werden, um das Schreiben des Pixelgenerators mit einer vorbestimmten Bltfolge als Reaktion auf erste Logikpegelbits und zweite Logikpegelbits eines Codewortes nach dem anderen einzeln freizugeben bzw. zu sperren, und
zyklisch die Schreibreaktion des Pixelgenerators schrittweise durch eine Reihe von Graustufenwerten laufen lassen, die ausgewählt sind, um den Binärgewichten der Bits der Codewörter im wesentlichen zu entsprechen, wobei die Schreibreaktion des Pixelgenerators mit der normalisierten Pixeldruckgeschwindigkeit zyklisch durchlaufen wird und mit der Bitfolge schrittweise durch die Bitgewichten entsprechenden Graustufenwerte geführt wird, um den Pixelgenerator mit den Codewörten zum Mehrfachschreiben der Pixels, die sie darstellen, codemäßig abzugleichen.

## Revendications

1. Système pour produire des restitutions observables par l'utilisateur d'images à niveau de gris variable représentées numériquement, ledit système comportant au moins un générateur de pixel (22a...) ayant une réponse en écriture à échelle de gris commandable pour écrire lesdites images sur un support d'enregistrement en réponse à des mots de code à bits multiples à longueur fixe qui représentent les pixels respectifs desdites images, lesdits mots de code étant codés binairement de sorte que chacun de leurs bits présente un poids binaire prédéterminé,
un moyen (23) pour appliquer les bits en série de certains desdits mots de code audit générateur de pixel, lesdits mots de code étant séquentiellement appliqués audit générateur de pixel à une vitesse d'impression de pixel normalisée pour activer et désactiver sélectivement l'écriture dudit générateur de pixel à une vitesse de bit prédéterminée en réponse et à des bits d'un premier niveau logique et d'un second niveau logique, respectivement, à partir des mots de code les uns après les autres, et
un moyen de modulateur (25) couplé audit générateur de pixel pour décaler cycliquement sa réponse en écriture par l'intermédiaire d'une série de valeurs d'échelle de gris sélectionnées pour faire concorder sensiblement les poids binaires des bits desdits mots de code, la réponse en écriture dudit générateur de pixel ayant un cycle correspondant à la vitesse d'impression de pixel normalisée et étant décalée par l'intermédiaire desdites valeurs d'échelle de gris à concordance de poids de bit à ladite vitesse de bit pour faire concorder le code dudit générateur de pixel auxdits mots de code pour l'écriture à passages multiples des pixels qu'ils représentent.

2. Système selon la revendication 1, dans lequel lesdits mots de code sont constitués de bits pondérés de manière symétrique, d'où il résulte que lesdits mots de code sont équilibrés.

3. Système selon la revendication 1, dans lequel lesdits mots de code sont constitués de bits pondérés de manière asymétrique qui sont ordonnés pour améliorer l'équilibre de ces mots de code.

4. Système selon l'une quelconque des revendications 1 à 3, dans lequel ledit générateur de pixel est un générateur de pixel optique et ledit support d'enregistrement est photo-sensible.

5. Système selon la revendication 4, dans lequel :
ledit générateur de pixel comprend un illuminateur pour délivrer un faisceau lumineux, un élément électro-optique (46) ayant une surface optiquement polie (47) pour réfléchir totalement de manière interne ledit faisceau lumineux et une paire d'électrodes voisines (45) intimement couplées de manière électrique à ladite surface,
lesdits mots de code sont appliqués en bits série auxdites électrodes pour produire une chute de tension entre lesdites électrodes qui est fonction des niveaux logiques desdits bits, d'où il résulte que ledit faisceau lumineux est modulé en conformité avec lesdits bits,
ledit support d'enregistrement (55) est exposé au faisceau lumineux modulé tout en avançant à une vitesse pratiquement constante dans la direction du processus par rapport audit générateur de pixel.

6. Système selon la revendication 4 ou la revendication 5, dans lequel ledit moyen de modulateur module en intensité ledit générateur de pixel optique pour décaler cycliquement sa réponse en écriture à travers ladite série de valeurs d'échelle de gris.

7. Système selon la revendication 4 et la revendication 5, dans lequel ledit moyen de modulateur module par largeur d'impulsion ledit générateur de pixel optique pour décaler cycliquement sa réponse en écriture à travers ladite série de valeurs d'échelle de gris.

8. Système selon la revendication 5, dans lequel ledit moyen de modulateur module en amplitude ladite chute de tension entre lesdites électrodes pour décaler cycliquement la réponse en écriture dudit générateur de pixel à travers ladite série de valeurs d'échelle de gris.

9. Procédé pour produire des restitutions observables par l'utilisateur d'images à niveau de gris variable représentées numériquement, utilisant un générateur de pixel ayant une réponse en écriture à échelle de gris commandable pour écrire sur un support d'enregistrement en réponse à des mots de code à bits multiples à longueur fixe, le procédé comprenant les étapes consistant à :
appliquer en bits série, au générateur de pixel des mots de codes à bits multiples de ladite longueur fixe, lesquels mots de code représentent les pixels respectifs desdites images et sont codés binairement, de sorte que chacun de leurs bits présente un poids binaire prédéterminé, lesdits mots de code étant séquentiellement appliqués audit générateur de pixel à une vitesse d'impression de pixel normalisée pour activer et désactiver sélectivement en écriture ledit générateur de pixel à une vitesse de bit prédéterminée en réponse à des bits d'un premier niveau logique et d'un second niveau logique, respectivement, l'un après l'autre, desdits mots de code, et
décaler cycliquement la réponse en écriture du générateur de pixel à travers une série de valeurs d'échelle de gris sélectionnées pour concorder sensiblement aux poids binaires des bits desdits mots de code,
la réponse en écriture dudit générateur de pixel ayant un cycle correspondant à la vitesse d'impression de pixel normalisé et étant décalée à travers lesdites valeurs d'échelle de gris à concordance de poids de bit à ladite vitesse de bit pour faire concorder en code ledit générateur de pixel auxdits mots de code pour écrire par passages multiples les pixels qu'ils représentent.
